# EUROPEAN PATENT SPECIFICATION

(11) **EP 3 663 902 B1**
(45) Date of publication and mention of the grant of the patent: **11.10.2023**
(21) Application number: 19211115.1
(22) Date of filing: 25.11.2019
(51) Int. Cl.: G06F 21/80, G06F 3/06, G06F 21/57, G06F 21/74, G06F 21/78

(54) **COMPUTER-IMPLEMENTED METHOD AND SYSTEM FOR REMOTELY MANAGING SELF-ENCRYPTING DISKS (SEDS) VIA CLIENT/SERVER TOPOLOGY**
COMPUTER-UMSETZUNGSMETHODE UND -SYSTEM FÜR DIE FERNVERWALTUNG VON SELBSTVERKREIBENDEN SCHEIBEN (SEDS) ÜBER KUNDEN- / SERVER-TOPOLOGIE
PROCÉDÉ ET SYSTÈME MIS EN OEUVRE PAR ORDINATEUR POUR GÉRER À DISTANCE DES DISQUES À AUTO-CRYPTAGE (SEDS) VIA UNE TOPOLOGIE CLIENT / SERVEUR

(30) Priority: 06.12.2018 IT 201800010856
(43) Date of publication of application: 10.06.2020
(73) Proprietor: MBDA ITALIA S.p.A., 00131 Roma (IT)
(72) Inventor: DI MAIO, Valerio, I-00131 Roma (IT); LOMUSCIO, Andrea, I-00131 Roma (IT); DE PAOLI, Emiliano, I-00131 Roma (IT)
(74) Representative: Perronace, Andrea

(56) References cited:
- GB-A- 2 434 724
- US-A1- 2012 239 917
- US-A1- 2012 254 602
- US-A1- 2017 085 374
- US-B1- 9 768 952
- Boteanu Daniel ET AL: "Bypassing Self- Encrypting Drives (SED) in Enterprise Environments", , 12 November 2015 (2015-11-12), pages 1-57, XP055947198, Retrieved from the Internet: URL:https://www.blackhat.com/docs/eu-15/ma terials/eu-15-Boteanu-Bypassing-Self-Encry pting-Drives-SED-In-Enterprise-Environment s.pdf [retrieved on 2022-07-28]

## Description

The present invention relates to a method for the remote management of Self-Encrypting Disks (SEDs) via client/server topology.

### Prior art

The problem of ensuring the cyber-security of systems is known.

When we talk about cyber-security, we mainly refer to three fundamental aspects that are:
- confidentiality: a set of rules that limits access to information;
- integrity: assurance that the information is reliable and accurate; and
- availability: guarantee that access to information is reliable and allowed only to authorized bodies.

In particular, computer security becomes necessary especially when managing safety-critical systems. In this regard, the management of Self-Encrypting Disks (SEDs) is a felt problem, and the prior art does not offer a centralized management of a distributed and connected system of SED devices, since the operator has to intervene manually on each one.

In particular, the OPAL (Trusted computing Group) disks do not benefit from any solution in this regard.

US9768952B1 relates to a cryptographic data storage device management system by locking and unlocking with cryptographic keys. Cryptographic keys are stored remotely on a keys server retrieved from a second server. The second server can determine which disks are locked and can send a request to the keys server to obtain the cryptographic keys corresponding to the disks to be unlocked. The second server can then unlock the disks by sending a command, all at the BIOS level.

US2017085374A1 relates to a technology that can enable an automatic generation of encryption keys using a service controller in communication with a keys manager server.

### Purpose and object of the invention

The object of the present invention is to provide a method for the remote management of one or more Self-Encrypting Disks (SEDs) via client/server topology, which solves in whole or in part the problems of the prior art.

The subject-matter of the present invention is a method according to the appended claims.

### Detailed description of exemplary embodiments of the invention

### List of figures

The invention will now be described by way of a non-limiting example, with particular reference to the drawings of the accompanying figures, in which:
- figure 1 shows a functional flow chart, covered by the scope of the appended claims, in which the various steps of authentication of the architecture according to an embodiment of the invention based on OPAL are given; and
- figure 2 shows a mixed block and flow chart, not covered by the scope of the appended claims, in which an example application of a possible implementation of the invention is given.

It is herein specified that elements of different embodiments may be combined together to provide further unlimited embodiments respecting the technical concept of the invention, as the man with average skills in the art understands without problems from what is described.

The present description also refers to the prior art for its implementation, with respect to the non-described detailed features, such as for example elements of minor importance usually used in the prior art in solutions of the same type.

When listing a list of elements or features in this description it is meant that the finding according to the invention "comprises" or alternatively "is composed of" such elements.

### Embodiments

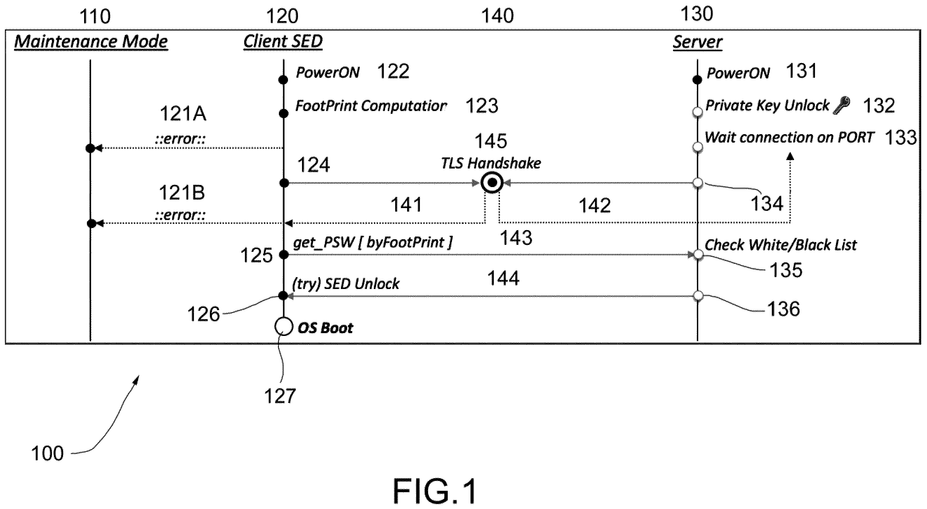

With reference to figure 1, the computer method and system according to the present invention are illustrated.

Hereinafter, reference will be made to the OPAL 2.0 standard, but it is understood that it is applicable to any other subsequent release by intervening at a high level.

In fact, the method according to the invention introduces:
- an "OPAL client", i.e. a SED disk;
- a sole "OPAL server";
- a network connection at the operating system level with minimal functionality, which allows the OPAL client to communicate securely with the OPAL server; and
- a function of calculation and verification of a footprint: it allows selectively sending the password (for locking/unlocking) from the OPAL Server to only authorized disks, whose footprint is included in a list of authorized disks or white list.

The footprint can be advantageously calculated on the basis of one or more univocal information related to the hardware where the OPAL disks are installed, typically a Single Board Computer (SBC), such as the serial number of a CPU of the board on which the disk is mounted, a serial number of the disk, the quantity and configuration of the memory and the cache, the configuration of the motherboard, the speed and the type of BUS, and so on. The quantity and choice of this information depend on the level of security required.

This information can for example be treated with Boolean mathematics, and then a hash of the treatment result can be created. The suggested implementation in this regard includes an SHA512 hash.

This hash, at this point uniquely associated with a disk, is taken as the footprint of the disk itself, and the OPAL server will use this hash to verify that the required receipt for locking/unlocking the disk is actually authorized, also to avoid malicious insertion and the use of unauthorized hard drives. In order to increase the overall security level of the solution, there is an additional level of verification to be carried out on the OPAL server side based on validation of the certificate (according to the X.509 standard) owned by the OPAL Client and also sent to the OPAL server at the time of the unlocking request.

The client-side storage of the certificate is carried out within the non-volatile memory area of the TPM located on the SBC.

Access to the memory area of the TPM is guaranteed through the native functionalities of the TPM itself which allow the sealing of a specific and pre-established configuration of its state and part of its registers called Platform Configuration Registers (PCR). Only if the Opal Client system has not been compromised in a malicious way, access to the memory area and therefore to the certificate is permitted.

The reference TPM version is 2.0.

To achieve this in the OPAL 2.0 standard, the tailoring of an unencrypted partition, the unencrypted part that is provided by the standard, is carried out on each SED disk.

On that unencrypted portion, a minimal operating system is deployed plus a small portion of specific code that is used to avoid unlocking each hard disk individually (by hand), according to the technical concepts of the present invention.

The operating system that is installed on the unencrypted partition is Tiny Core. Its main features are as follows:
- Linux kernel: version 4.3.0.
- Busybox: basic application suite for linux systems with the main commands such as: adduser, chroot, cp, fdisk, ifconfig.
- Tiny X: minimal graphic server.
- Fltk: Fast Light ToolKit.
- openssl: for secure communications.
- lshw: for creating the footprint.

The following is a detailed description of the functional flow chart of Figure 1.

When the entire system 100 is switched off, the SED 120 disks are in the locked state, so it is not possible to access the data residing on them, if the same disks 120 are not unlocked before.

However, it is possible to access a small portion of the disk memory (not shown) in which the disk management program 120 (Client SED) resides, as described above.

When the system 100 is turned on (for each disk SED 120) this disk management or unlocking program according to the invention will be loaded and executed in 122, since this is the only portion of the memory in clear, since the disk is still locked. The Client SED 120 then listens for the connection with Server 130. When the latter is also started at 131, it will respond to the Client SED 120 by sending in 132,133,134,145 the password to unlock the disk.

However, Server 130 conveniently ensures, first of all, that the request of the Client SED 120 is legitimate and does not come from third parties for non-legitimate purposes. To do this, the Client SED 120 will generate a Footprint in 123 combining various information related for example to the disk hardware or to a supporting hardware, as explained above. Once the Footprint has been generated, this, together with its X.509 certificate, will be sent in 143 to Server 130 which, in 135, will compare footprint and certificate with a whitelist to verify that the disk is present among those authorized.

Subsequently, the Server 130 will send the password of the disk to the Client SED 120 in step 136,144 which can then be unlocked. If unlocking is successful in 126, the machine will restart in 127 and the disk will be accessible. To avoid situations of ambiguity on the same disk, which normally can boot only one partition, upon restarting the portion of the memory that was previously unencoded and on which the Client SED (SED disk client program) resided is not accessible anymore (i.e. it will be blocked). When the disk is locked again, the locking situation between the partitions will be advantageously reversed.

The rest of the disk, which was previously encrypted and not accessible, will now be clear and accessible as a normal hard drive.

In the event that the connection with the Server 130 fails, or in the event that the Footprint or the certificate are not recognized in 135, the Client SED can enter, respectively in step 121A or 121B, in maintenance mode 110. In this mode it is possible to unlock the disk 120 by manually entering an unlock password with the aid, for example, of a monitor and a keyboard (not shown).

The management of the maintenance mode is made possible thanks to the operating system loaded into the unencrypted partition and to a specially developed software, which after rejection of the OPAL server, allows regaining control of the OPAL client and redirecting the request for disk release to an operator via command line or graphic output.

The maintenance mode described above is not related to the SED disk or the OPAL standard, but refers to all the proposed architecture. This mode allows an exit route (clearly no longer nominal) from the *impasse* situation if the server control fails. This situation can occur as a result of attacks or attack attempts on SED disks or SBCs in general, which could compromise one of the three fundamental aspects described above (confidentiality, integrity, reliability).

Advantageously, at the start of the procedure, in order to prevent the server 130 from sending the passwords to the disks 120 as soon as it is turned on in 131, an access password 132 is requested to the server 130, so that the one who is accessing is recognized.

In order to establish the aforementioned client/server connection, for example, TLS handshake procedures 145 can be used to initiate an encrypted connection.

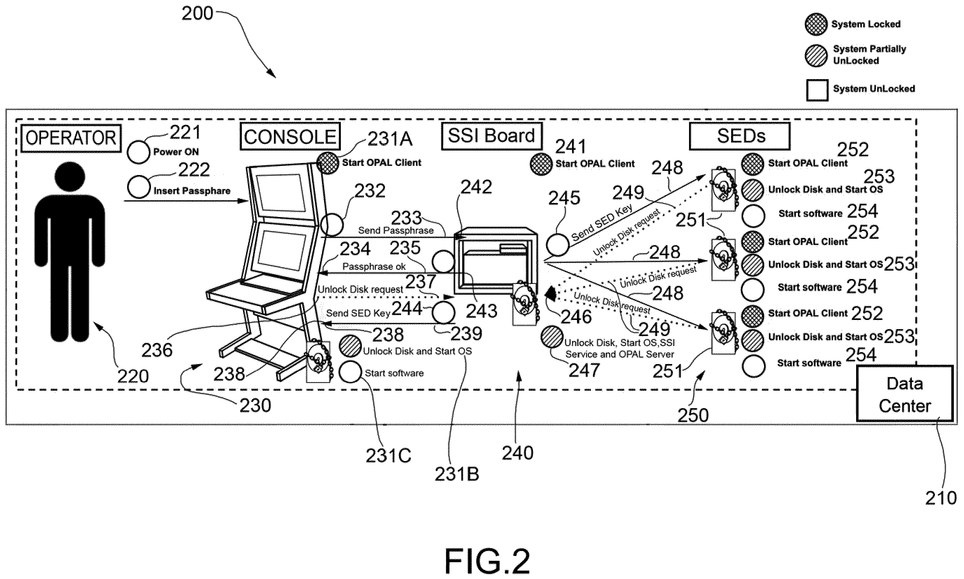

With reference to the system example 200 (data center 210) of Fig. 2, which illustrates an example application of a possible implementation of the invention, not covered by the scope of the appended claims, a central console 230 can be provided, which connects to the "SSI Board" server 240, to control the unlocking of the disks 250.

Console 230 is the user interface 220 to server 240. User 230 turns on the console in 221 and enters a passphrase in 222. Console 230 starts the OPAL client for its own disk. However, it must be understood that the console disk can also be accessed via another system, for example via SATA commands, not detecting OPAL SED 250 for disk management. The console OPAL client is started in 231A, in 232, 233, 242 the console sends a passphrase to server 240, which in 234, 235, 243 confirms the correctness of the passphrase. At this point the console 230 can request to unlock the disk and the server 240 sends the SED key to 244, 238, 239 for this purpose. The release of the disk takes place in 231B and the start-up of the data center 210 management software takes place in 231B.

The server can now go to access the OPAL 250 disks, where for each disk 251:
- the OPAL client 252 is started;
- the SED key is sent (which is actually a password) in 245, 248 from the server to the SED client;
- a request 246, 249 for disk unlocking is sent from the 240 server to the OPAL client;
- the disk is unlocked and the local operating system is started in 253;
- a work program resident on disk 250 is started at 254.

### Advantages of the invention

The architecture according to the present invention allows the remote management of Self-Encrypting Disks (SEDs) using a client server topology.

This technology is particularly useful in the case of embedded systems where there are no man-machine interfaces for managing and unlocking them.

In the foregoing the preferred embodiments have been described and variants of the present invention have been suggested, but it is to be understood that those skilled in the art will be able to make modifications and changes without thereby departing from the relevant scope of protection, as defined by the appended claims.

## Claims

1. A computer-implemented method (100) for remotely managing Self-Encrypting Disks referred to as "SEDs", via client/server topology, comprising the use of one or more remote SEDs (120), mounted on a computer including a CPU, a memory, a motherboard and a bus, and remotely connected through a telecommunications network to a sole server (130) and having respective unencrypted partitions thereon which are freely accessible by the sole server (130) and respective secure partitions, wherein the following steps are performed:
A. loading and running respective disk unlocking client programs by said one or more remote SEDs (120) from said respective freely accessible partitions,
B. requesting (125,143), by said respective disk unlocking client programs, one or more passwords to said sole server (130), respectively;
C. sending (136, 144, 126), by the sole server (130), said one or more passwords to said one or more remote SEDs (120), respectively; and
D. unlocking (127), by said respective disk unlocking client programs, the respective secure partitions, if said one or more passwords match one or more predetermined passwords, respectively;
and wherein:
- the one or more remote SED disks support Opal Storage Specification;
- the respective disk unlocking client programs run on the one or more remote SED disks and are OPAL clients;
- the sole server (130) is a sole OPAL server;
- in step B, the respective OPAL clients compute (123) and send to the sole server (130) respective footprints on the basis of predetermined information, the respective footprints being computed as respective hashes of respective alphanumeric strings obtained on the basis of respective CPU serial numbers of the respective boards on which said one or more disks are mounted, as well as the respective serial disk numbers;
- in step C, the sole OPAL server (130) checks (135) for the presence of said respective footprints in a list of authorized footprints, before sending (136,144) said one or more passwords, respectively, to the OPAL clients;
- step D is performed by restarting (127) said one or more remote SEDs (120), wherein, at each restart of said one or more remote SEDs (120), the respective, freely accessible partitions and the respective secure partitions become alternately freely accessible;
- a Tiny Core operating system is installed on an unencrypted partition of the one or more remote SEDs (120) freely accessible by the sole OPAL server (130) .

2. A method (100) according to claim 2, wherein, if in step D said one or more passwords do not correspond to said one or more predetermined passwords, respectively, their respective disk unlocking programs switch to a maintenance mode (110), wherein said respective secure partitions can be unlocked by entering said one or more passwords, respectively, by means of a physical interface directly connected to said one or more remote SEDs (120).

3. A method (100) according claim 1 or 2, wherein the communication between the sole OPAL server (130) and said one or more remote SED disks (120) uses a "TLS handshake" procedure (124,145,134) in order to start an encrypted connection.

4. A method (100) according to one or more of claims 1 to 3, wherein, in step B, said respective disk unlocking programs send a security certificate to said sole OPAL server (130) and in said step C the sole OPAL server verifies the authenticity of said security certificate, wherein the security certificate is stored on the respective Trusted Platform Module installed on said one or more remote SED disks (120).

5. A method (100) according to claim 4, wherein said security certificate meets the X.509 standard.

6. A computer system (100) with client/server topology for remotely managing Self-Encrypting Disks referred to as "SEDs", comprising:
- a sole OPAL server (130);
- one or more remote OPAL SED disks (120), mounted on a computer including a CPU, a memory, a motherboard and a bus, comprising:
▪ respective unencrypted partitions which are freely accessible by the sole OPAL server (130), and
▪ respective secure partitions,
wherein the one or more remote OPAL SED disks are remotely connected to said sole OPAL server (130) through
- a telecommunications network,
wherein:
- said one or more remote OPAL SEDs (120) have each a Tiny Core operating system installed on its unencrypted partition freely accessible by the sole OPAL server and their respective disk unlocking OPAL client programs installed thereon and configured and adapted to perform steps B, D of the method according to any one of claims from 1 to 5; and
- said sole OPAL server (130) having a program installed thereon configured and adapted to perform steps C of the method according to any one of claims 1 to 5.

## Patentansprüche

1. Computer-Umsetzungsmethode (100) zur Fernverwaltung von selbstverkreibenden Scheiben, die als "SEDs" bezeichnet werden, über eine Kunden-/Server-Topologie, umfassend die Verwendung einer oder mehrerer entfernter SEDs (120), die auf einem Computer montiert sind, der eine CPU, einen Speicher, eine Hauptplatine und einen Bus beinhaltet, und die über ein Telekommunikationsnetz mit einem einzigen Server (130) fernverbunden sind und entsprechende unverschlüsselte Partitionen darauf aufweisen, auf die der einzige Server (130) frei zugreifen kann, und jeweilige sichere Partitionen,
wobei folgende Schritte durchgeführt werden:
A. Laden und Ausführen jeweiliger Kundenprogramme zum Entsperren von Scheiben durch die eine oder die mehreren entfernten SEDs (120) von den jeweiligen frei zugänglichen Partitionen,
B. Anfordern (125, 143) von einem bzw. mehreren Passwörtern an den einzigen Server (130) durch die jeweiligen Kundenprogramme zum Entsperren von Scheiben;
C. Senden (136, 144, 126) des einen oder der mehreren Passwörter an die eine bzw. die mehreren entfernten SEDs (120) durch den einzigen Server (130); und
D. Entsperren (127) der jeweiligen sicheren Partitionen durch die jeweiligen Kundenprogramme zum Entsperren von Scheiben, wenn das eine oder die mehreren Passwörter mit einem bzw. mehreren vorgegebenen Passwörtern übereinstimmen;
und wobei:
- die eine oder die mehreren entfernten SED-Scheiben Opal Storage Specification unterstützen;
- die jeweiligen Kundenprogramme zum Entsperren von Scheiben auf der einen oder den mehreren entfernten SED-Scheiben laufen und OPAL-Kunden sind;
- der einzige Server (130) ein einziger OPAL-Server ist;
- in Schritt B die jeweiligen OPAL-Kunden basierend auf vorbestimmten Informationen jeweilige Fußabdrücke berechnen (123) und an den einzigen Server (130) senden, wobei die jeweiligen Fußabdrücke als jeweilige Hashes jeweiliger alphanumerischer Zeichenfolgen berechnet werden, die basierend auf jeweiligen CPU-Seriennummern der jeweiligen Platinen, auf denen die eine oder die mehreren Scheiben montiert sind, sowie den jeweiligen Scheibenseriennummern erhalten werden;
- in Schritt C der einzige OPAL-Server (130) das Vorhandensein der jeweiligen Fußabdrücke in einer Liste von autorisierten Fußabdrücken prüft (135), bevor er das eine oder die mehreren Passwörter an die OPAL-Kunden sendet (136, 144);
- Schritt D durch einen Neustart (127) der einen oder der mehreren entfernten SEDs (120) durchgeführt wird, wobei bei jedem Neustart der einen oder der mehreren entfernten SEDs (120) die jeweiligen frei zugänglichen Partitionen und die jeweiligen sicheren Partitionen abwechselnd frei zugänglich werden;
- ein Tiny Core-Betriebssystem auf einer unverschlüsselten Partition der einen oder der mehreren entfernten SEDs (120) installiert ist, auf das der einzige OPAL-Server (130) frei zugreifen kann.

2. Methode (100) nach Anspruch 2, wobei, wenn in Schritt D das eine oder die mehreren Passwörter nicht mit dem einen bzw. den mehreren vorgegebenen Passwörtern übereinstimmen, ihre jeweiligen Programme zum Entsperren von Scheiben in einen Wartungsmodus (110) schalten, wobei die jeweiligen sicheren Partitionen durch Eingeben des einen bzw. der mehreren Passwörter mittels einer direkt mit der einen oder den mehreren entfernten SEDs (120) verbundenen physischen Schnittstelle entsperrt werden können.

3. Methode (100) nach Anspruch 1 oder 2, wobei die Kommunikation zwischen dem einzigen OPAL-Server (130) und der einen oder den mehreren entfernten SED-Scheiben (120) ein "TLS Handshake"-Verfahren (124, 145, 134) verwendet, um eine verschlüsselte Verbindung zu starten.

4. Methode (100) nach einem oder mehreren der Ansprüche 1 bis 3, wobei in Schritt B die jeweiligen Programme zum Entsperren von Scheiben ein Sicherheitszertifikat an den einzigen OPAL-Server (130) senden und in Schritt C der einzige OPAL-Server die Authentizität des Sicherheitszertifikats verifiziert, wobei das Sicherheitszertifikat auf dem jeweiligen Trusted Platform Module gespeichert ist, das auf der einen oder den mehreren entfernten SED-Scheibe (120) installiert ist.

5. Methode (100) nach Anspruch 4, wobei das Sicherheitszertifikat dem X.509-Standard entspricht.

6. Computersystem (100) mit Kunden-/Server-Topologie zur Fernverwaltung von selbsverkreibenden Scheiben, die als "SEDs" bezeichnet werden, umfassend:
- einen einzigen OPAL-Server (130);
- eine oder mehrere entfernte OPAL-SED-Scheiben (120), die auf einem Computer montiert sind, der eine CPU, einen Speicher, eine Hauptplatine und einen Bus beinhaltet, umfassend:
▪ jeweilige unverschlüsselte Partitionen, auf die der einzige OPAL Server (130) frei zugreifen kann, und
▪ jeweilige sichere Partitionen,
wobei die eine oder die mehreren entfernten OPAL-SED-Scheiben mit dem einzigen OPAL-Server (130) verbunden sind über
- ein Telekommunikationsnetzwerk,
wobei:
- die eine oder die mehreren entfernten OPAL-SEDs (120) jeweils ein auf ihrer unverschlüsselten Partition installiertes Tiny Core Betriebssystem aufweisen, auf die der einzige OPAL-Server frei zugreifen kann, und ihre jeweiligen OPAL-Kundenprogramme zum Entsperren von Scheiben darauf installiert haben und so konfiguriert und angepasst sind, dass sie die Schritte B, D der Methode nach einem der Ansprüche 1 bis 5 ausführen; und
- der einzige OPAL-Server (130) ein darauf installiertes Programm aufweist, das so konfiguriert und angepasst ist, dass es die Schritte C des Verfahrens nach einem der Ansprüche 1 bis 5 ausführt.

## Revendications

1. Procédé (100) mis en oeuvre par ordinateur pour gérer à distance des disques à auto-cryptage appelés « SED », via une topologie client/serveur, comprenant l'utilisation d'un ou plusieurs SED distants (120), montés sur un ordinateur comportant une UC, une mémoire, une carte-mère et un bus et connectés à distance par un réseau de télécommunications à un serveur unique (130) et comportant des partitions non cryptées respectives librement accessibles par le serveur unique (130) et des partitions sécurisées respectives,
dans lequel les étapes suivantes sont effectuées :
A. chargement et exécution de programmes clients de déverrouillage de disque respectifs par lesdits un ou plusieurs SED distants (120) à partir desdites partitions librement accessibles respectives,
B. demande (125, 143), par lesdits programmes clients de déverrouillage de disque respectifs, d'un ou de plusieurs mots de passe audit serveur unique (130), respectivement ;
C. envoi (136, 144, 126), par le serveur unique (130), desdits un ou plusieurs mots de passe auxdits un ou plusieurs SED distants (120), respectivement ; et
D. déverrouillage (127), par lesdits programmes clients de déverrouillage de disque respectifs, des partitions sécurisées respectives, si lesdits un ou plusieurs mots de passe correspondent à un ou plusieurs mots de passe prédéterminés, respectivement ;
et dans lequel :
- le ou les disques SED distants prennent en charge la spécification de stockage Opal ;
- les programmes clients de déverrouillage de disque respectifs s'exécutent sur le ou les disques SED distants et sont des clients OPAL ;
- le serveur unique (130) est un serveur OPAL unique ;
- à l'étape B, les clients OPAL respectifs calculent (123) et envoient au serveur unique (130) des empreintes respectives sur la base d'informations prédéterminées, les empreintes respectives étant calculées comme des hachages respectifs de chaînes alphanumériques respectives obtenues sur la base de numéros de série respectifs d'UC des cartes respectives sur lesquelles lesdits un ou plusieurs disques sont montés, ainsi que des numéros de série respectifs des disques ;
- à l'étape C, le serveur OPAL unique (130) vérifie (135) la présence desdites empreintes respectives dans une liste d'empreintes autorisées, avant d'envoyer (136, 144) lesdits un ou plusieurs mots de passe, respectivement, aux clients OPAL ;
- l'étape D est exécutée en redémarrant (127) lesdits un ou plusieurs SED distants (120), dans lequel, à chaque redémarrage desdits un ou plusieurs SED distants (120), les partitions librement accessibles respectives et les partitions sécurisées respectives deviennent alternativement librement accessibles ;
- un système d'exploitation Tiny Core est installé sur une partition non cryptée du ou des SED distants (120) librement accessible par le serveur OPAL unique (130).

2. Procédé (100) selon la revendication 2, dans lequel, si à l'étape D, lesdits un ou plusieurs mots de passe ne correspondent pas auxdits un ou plusieurs mots de passe prédéterminés, respectivement, leurs programmes de déverrouillage de disque respectifs passent à un mode de maintenance (110), dans lequel lesdites partitions sécurisées respectives peuvent être déverrouillées en entrant lesdits un ou plusieurs mots de passe, respectivement, au moyen d'une interface physique directement connectée auxdits un ou plusieurs SED distants (120).

3. Procédé (100) selon la revendication 1 ou 2, dans lequel la communication entre le serveur OPAL unique (130) et lesdits un ou plusieurs disques SED distants (120) utilise une procédure d'« établissement de liaison TLS » (124, 145, 134) afin de démarrer une connexion cryptée.

4. Procédé (100) selon une ou plusieurs des revendications 1 à 3, dans lequel, à l'étape B, lesdits programmes de déverrouillage de disque respectifs envoient un certificat de sécurité audit serveur OPAL unique (130) et, à ladite étape C, le serveur OPAL unique vérifie l'authenticité dudit certificat de sécurité, dans lequel le certificat de sécurité est stocké sur le module de plate-forme de confiance respectif installé sur lesdits un ou plusieurs disques SED distants (120).

5. Procédé (100) selon la revendication 4, dans lequel ledit certificat de sécurité répond à la norme X.509.

6. Système informatique (100) à topologie client/serveur pour la gestion à distance de disques à auto-cryptage appelés « SED », comprenant :
- un serveur OPAL unique (130) ;
- un ou plusieurs disques SED OPAL distants (120), montés sur un ordinateur comportant une UC, une mémoire, une carte-mère et un bus, comprenant :
▪ des partitions non cryptées respectives qui sont librement accessibles par le serveur OPAL unique (130) et
▪ des partitions sécurisées respectives,
dans lequel le ou les disques SED OPAL distants sont connectés à distance audit serveur OPAL unique (130) via
- un réseau de télécommunication,
dans lequel :
- lesdits un ou plusieurs SED OPAL distants (120) ont chacun un système d'exploitation Tiny Core installé sur leur partition non cryptée librement accessible par le serveur OPAL unique et leurs programmes clients OPAL de déverrouillage de disque respectifs installés sur ceux-ci et configurés et adaptés pour exécuter les étapes B, D du procédé selon l'une quelconque des revendications 1 à 5 ; et
- ledit serveur OPAL unique (130) ayant un programme installé sur celui-ci, configuré et adapté pour exécuter les étapes C du procédé selon l'une quelconque des revendications 1 à 5.
